# EUROPEAN PATENT SPECIFICATION

(11) **EP 3 742 038 B1**
(45) Date of publication and mention of the grant of the patent: **09.03.2022**
(21) Application number: 19176327.5
(22) Date of filing: 24.05.2019
(51) Int. Cl.: F16L 58/18, F16L 23/12

(54) **FLANGE LINER PIPE FITTING STRUCTURE**
FLANSCHAUSKLEIDUNGSROHR-MONTAGESTRUKTUR
STRUCTURE DE FIXATION DE TUYAU DE REVÊTEMENT DE BRIDE

(43) Date of publication of application: 25.11.2020
(73) Proprietor: Shin Yueh Applied Materials Co., Ltd., Zhongli City, Taoyuan County 320 (TW)
(72) Inventor: Chen, Ching-Hsien, Cambridge, CB1 1AH (GB)
(74) Representative: Horak, Michael

(56) References cited:
- US-A- 4 493 864
- US-A1- 2011 006 515

## Description

### TECHNICAL FIELD OF THE INVENTION

The present invention relates to a flange liner pipe fitting structure, and more particularly to a flange liner pipe fitting structure that improves airtightness between a corrosion-resistant layer and a main body unit and enhance flow smoothness in a flow channel formed in the main body unit so as to enhance utilization of the pipe fitting.

### DESCRIPTION OF THE PRIOR ART

Conveyance of liquid or gas is often conducted with certain pipe fittings that are installed to provide connection between a storage tank and an egress pipe, so as to simplify ingress and egress of liquid or gas. To convey liquid or gas that is corrosive, the pipe fittings must be those that are capable of resisting to corrosion caused by acid and/or alkali in order to prevent potential leakage caused by corrosion of the pipe fittings by the liquid or gas.

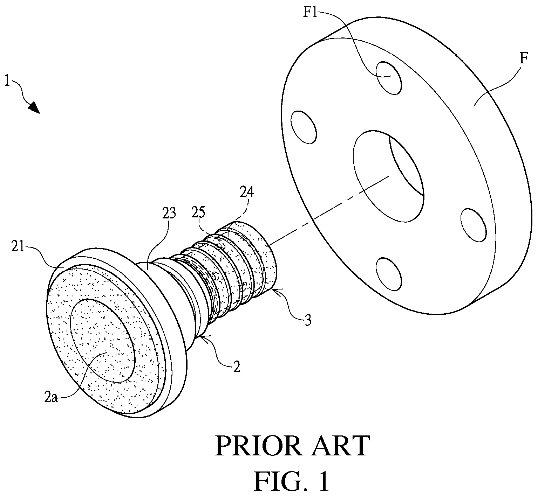

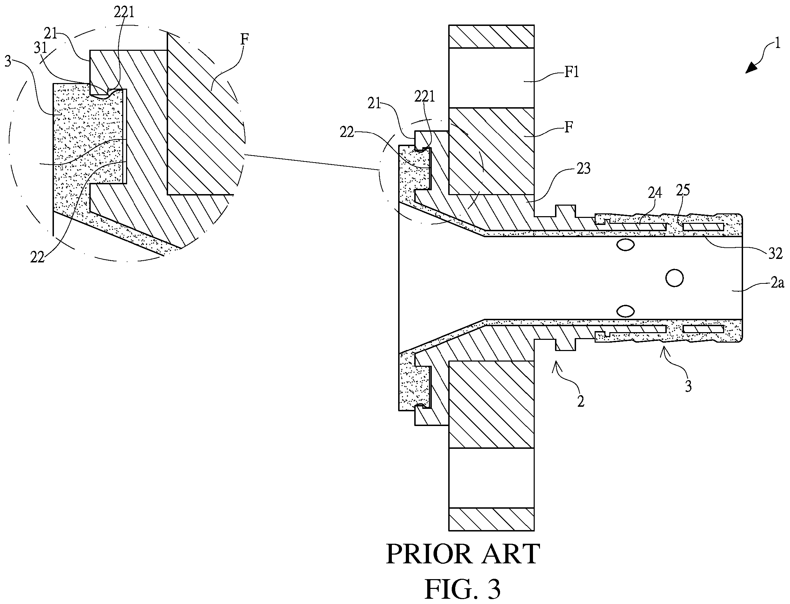

As shown in FIGS. 1, 2, and 3, in order to make a pipe fitting 1 that is resistant to corrosion caused by acids and alkalis, the pipe fitting 1 is structured to comprise a main body unit 2 and a corrosion-resistant layer 3 coated on and covering the main body unit 2. The main body unit 2 is made of a metal material and the main body unit 2 comprises a flow channel 2a extending therethrough. The main body unit 2 has a front end that is formed with a rim 21 in the form of an annular projection. The rim 21 is partly recessed to form an annular fitting groove 22, and the rim 21 is provided, on a side thereof facing rearward, with a neck section 23 that defines a step with respect to the rim 21 by means of a dimension difference therebetween. The neck section 23 is provided, on a side thereof facing rearward, with a connecting section 24 having an outside diameter smaller than the neck section 23. The connecting section 24 is formed, in a circumferential wall thereof, with a plurality of through apertures 25 penetrating to the flow channel 2a. A side of the fitting groove 22 is provided, at a bottom part thereof, with chamfering that forms a retaining trough 221 extending in a direction toward outside of the rim 21.

As shown in FIGS. 1, 2, 3, and 4, the corrosion-resistant layer 3 is made of a mixed material comprising a corrosion-resistant material. The corrosion-resistant layer 3 is molded, through injection, over inner and outer sides of the main body unit 2. More specifically, the corrosion-resistant layer 3 is formed to cover a surface of the flow channel 2a of the main body unit 2, an end surface of the rim 21, and an outside surface of the connecting section 24, and is also embedded in the through apertures 25. An outside surface of a part of the corrosion-resistant layer 3 formed on the connecting section 24 is made in a stepped form by a mold in an injection operation in order to ease fitting of a pipe P thereto.

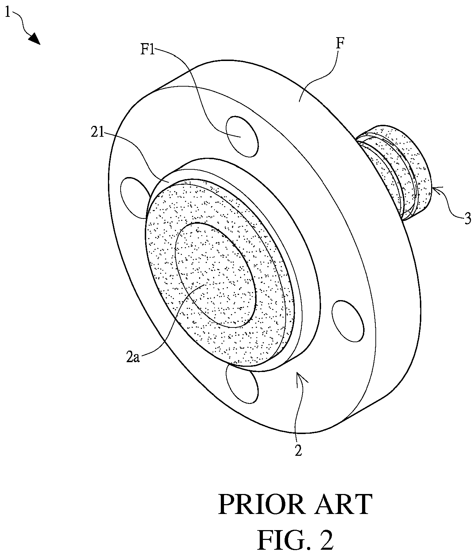

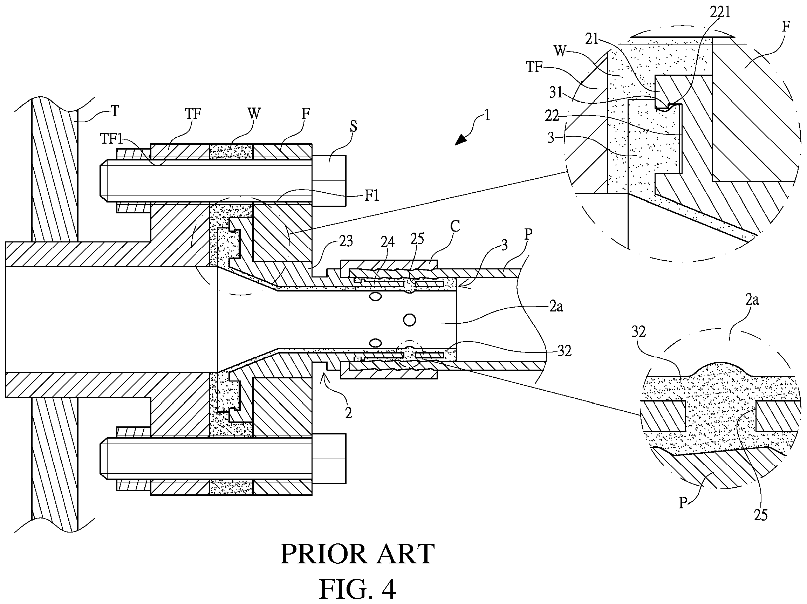

As shown in FIGS. 2 and 4, to use the pipe fitting 1, a flange F is fit over an outer circumference of the neck section 23 of the main body unit 2 and fastening elements S are set through fastening holes F1 of the flange F to screw into and thus fix to fixing holes TF1 of an egress flange TF of a storage tank T of liquid or gas. Further, a gasket W for preventing leaking is interposed between the flange F and the egress flange TF, such that the gasket W covers the end surface of the rim 21 of the main body unit 2. The connecting section 24 of the main body unit 2 receives the pipe P to fit thereon and then, a pipe clamp C is set around the outside of the pipe P to clamp and secure tightness between the pipe P and the connecting section 24 for preventing the pipe P from detaching from the connecting section 24. As such, corrosive liquid or gas stored in the storage tank T is allowed to flow through the egress flange TF into the flow channel 2a inside the main body unit 2 of the pipe fitting 1 for subsequent entry into the pipe P, so as to convey the corrosive liquid or gas from the storage tank T to other location.

In the above-described structure the known pipe fitting 1, the corrosion-resistant layer 3 is injected onto and molded on and covers a surface of the flow channel 2a of the main body unit 2, an end surface of the rim 21, and an outside surface of the connecting section 24. Although the corrosion-resistant layer 3 is effective to isolate the corrosive liquid or gas from directly contacting the main body unit 2 during conveyance so as to prevent a potential risk that leaking may occur due to the main body unit 2 being corroded by the corrosive liquid or gas, the corrosion-resistant layer 3 that is made of a plastic material and the main body unit 2 that is made of a metal material are respectively formed of two different materials having different properties, and it is quite questionable if the corrosion-resistant layer 3 could be securely and stably attached to the main body unit 2 without unexpected and undesired separation. Certain detaching preventing mechanisms are provided on the main body unit 2 for such a purpose. In the above-described structure of the known pipe fitting 1, a lateral side of the fitting groove 22 of the main body unit 2 is formed with the retaining trough 221 so that upon being injected, the corrosion-resistant layer 3 may penetrate into the retaining trough 221 to form a retaining section 31. The retaining section 31 may provide a retaining effect with the retaining trough 221. However, after the corrosion-resistant layer 3 is injected onto and molded on and thus covering the main body unit 2, a pulling force induced in removal from the mold, a gap might be generated between the corrosion-resistant layer 3 and the main body unit 2, making them losing tightness therebetween, because the corrosion-resistant layer 3 has only one retaining section 31 formed on the main body unit 2. Further, the through apertures 25 that are formed in the main body unit 2 by means of drilling, and consequently, cracking may be generated around the through apertures 25. Such cracking around the through apertures 25 may causes bubbling in the corrosion-resistant layer 3 around the through apertures 25 after injection and molding. This further causes losing of airtightness of the corrosion-resistant layer 3 injected onto and molded on the main body unit 2. Further, conveyance of liquid or gas requires pressurizing or pumping, and this may potentially cause leaking of liquid or gas through the pipe fitting 1. Further, the corrosion-resistant layer 3, during injecting and molding, may penetrate into the through apertures 25 to form a stop section 32. After a pipe clamp C is set around and tightly clamps the pipe P, the stop section 32 that is formed with a part of the corrosion-resistant layer 3 penetrating into the through apertures 25 would be such that the stop section 32 projects further into the flow channel 2a. Consequently, the stop section 32 of the corrosion-resistant layer 3 may causes hinderance to flow rate of the flow channel 2a and may also make impurity attached thereto to even worsen the hinderance of the flow rate of the flow channel 2a.

Prior art patent documents are known, such as US-A-2011/006516 and US-A-4 493 864. However, these documents do not suggest a corrosion-resistant layer that is securely attached to a pipe fitting through a raised feature, a retaining trough, and a roughened surface to respectively engage and fix different parts of the corrosion-resistant layer.

### SUMMARY OF THE INVENTION

The primary objective of the present invention is to provide a flange linear pipe fitting structure, which helps overcome the shortcoming of a known pipe fitting that airtightness between a corrosion-resistant layer and a main body unit is poor and flow rate of a flow channel of the main body unit the flow channel may be hindered by the corrosion-resistant layer.

For such a purpose, a technical solution proposed in claim 1 of the present invention provides a flange liner pipe fitting structure. The pipe fitting comprises a main body unit and a corrosion-resistant layer formed on and covering the main body unit. The main body unit comprises a flow channel extending therethrough and has a front end formed with a rim. The rim is formed, through recessing, with a fitting groove. The rim is formed, as being extended in a rearward direction, with a neck section that defines a step with respect to the rim by means of a dimension difference therebetween. The neck section is formed with a connecting section that faces rearward and has a diameter smaller than the neck section. The corrosion-resistant layer is formed to cover a surface of the flow channel of the main body unit, an end surface of the rim, and an outside surface of the connecting section. The corrosion-resistant layer forms three retaining sections on the rim of the main body unit and the outside surface of the connecting section. The end surface of the rim is formed, as being extended frontward, with a raised ring in the form of an annular projection and facing frontward. An outer side of the raised ring and the end face of the rim form an annular retaining notch in the form of a chamfering angle. The corrosion-resistant layer forms the first retaining section in the annular retaining notch. The fitting groove is formed with a retaining trough in the form of a chamfer extending toward the flow channel. The corrosion-resistant layer forms the second retaining section in the retaining trough. The connecting section has an outer circumferential surface that is formed with a roughened supporting surface. The corrosion-resistant layer forms the third retaining section on the supporting surface.

The efficacy that the present invention may achieve with the technical solution of claim 1 is that airtightness between the corrosion-resistant layer and the main body unit can be enhanced and smoothness of flowing through the flow channel of the main body unit can be improved, so as to enhance the utilization of the pipe fitting.

### BRIEF DESCRIPTION OF THE DRAWINGS

FIG. 1 is an exploded view showing a conventional pipe fitting.
FIG. 2 is a perspective view of the conventional pipe fitting.
FIG. 3 is a cross-sectional view of the conventional pipe fitting.
FIG. 4 illustrates a condition of use of the conventional pipe fitting.
FIG. 5 is an exploded view showing a pipe fitting according to the present invention.
FIG. 6 is a perspective view of the pipe fitting according to the present invention.
FIG. 7 is a cross-sectional view of the pipe fitting according to the present invention.
FIG. 8 illustrates a pipe fitting according to another embodiment of the present invention.
FIG. 9 illustrates an example of use of the pipe fitting according to the present invention.

### DETAILED DESCRIPTION OF THE PREFERRED EMBODIMENT

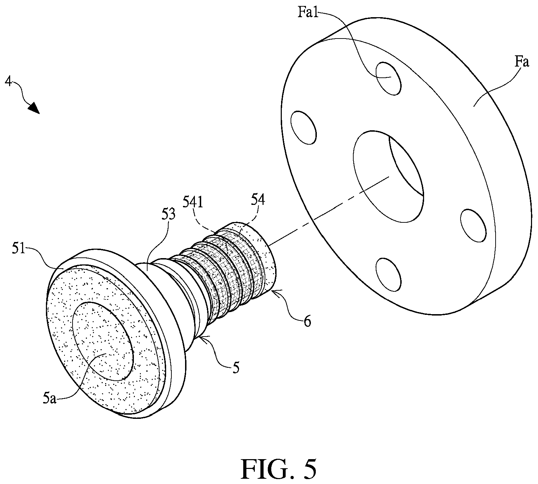

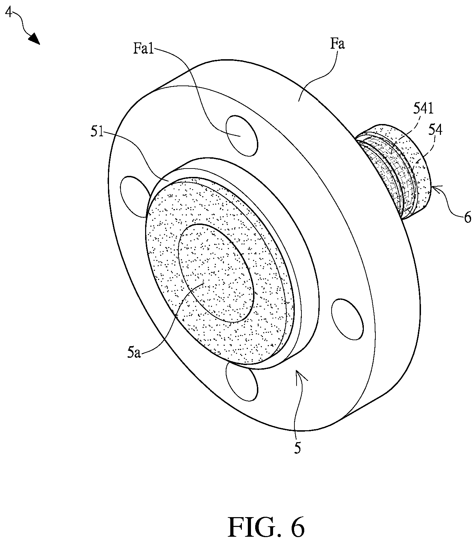

Referring to FIGS. 5 and 6, the present invention provides a pipe fitting 4, which comprises a main body unit 5 and a corrosion-resistant layer 6 formed on and covering the main body unit 5.

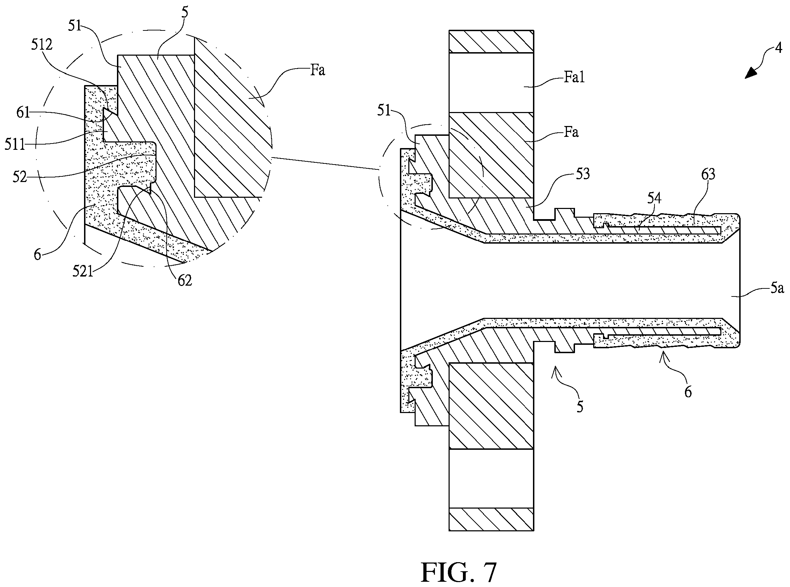

As shown in FIGS. 5, 6, and 7, the main body unit 5 is made of a metal material. The main body unit 5 comprises a flow channel 5a extending therethrough. The main body unit 5 has a front end that is formed with a rim 51 in the form of an annular projection. The rim 51 is formed, as being recessed, with an annular fitting groove 52. The rim 51 is formed, as being extended in a rearward direction, with a neck section 53 that defines a step with respect to the rim 51 by means of a dimension difference therebetween. The neck section 53 is formed, as being extended rearward, with a connecting section 54 that faces rearward and has a diameter smaller than the neck section 53. The rim 51 has an end surface that is formed, as being extended frontward, with a raised ring 511 made in the form as an annular projection that faces frontward. The raised ring 511 has an outer side that forms, in combination with the end face of the rim 51, an annular retaining notch 512 that is made in the form of a chamfering angle. The fitting groove 52 is formed with a retaining trough 521, which is made in the form of a stepped chamfer, extending in direction toward the flow channel 5a.

The connecting section 54 has an outer circumferential surface that is formed, through for example embossing, with a roughened supporting surface 541.

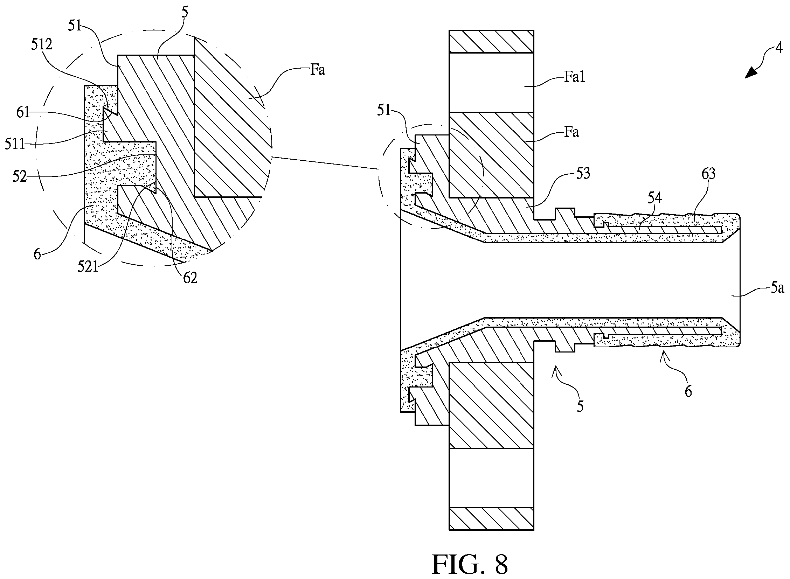

As shown in FIG. 8, the fitting groove 52 is formed with a retaining trough 521 that is made in the form of a chamfer extending toward the flow channel 5a.

As shown in FIGS. 5, 6, and 7, the corrosion-resistant layer 6 is made of a mixed material comprising a corrosion-resistant material (such as Teflon, or PTFE) and a plastic material. The corrosion-resistant layer 6 is molded, through injection, over inner and outer sides of the main body unit 5. More specifically, the corrosion-resistant layer 6 is formed to cover a surface of the flow channel 5a of the main body unit 5, the end surface of the rim 51, and the supporting surface 541 of the connecting section 54. As such, the corrosion-resistant layer 6 may fill into the annular retaining notch 512 of the main body unit 5 to form a first retaining section 61; and the corrosion-resistant layer 6 may also fill into the retaining trough 521 of the main body unit 5 to form a second retaining section 62. Further, since the supporting surface 541 of the connecting section 54 of the main body unit 5 is formed as a roughened surface through for example embossing or knurling, the corrosion-resistant layer 3, upon being injected onto and molded on, and thus covering, the supporting surface 541, forms a third retaining section 63.

In this way, a retaining effect can be achieved with the first retaining section 61, the second retaining section 62, and the third retaining section 63 to prevent a gap from forming between the corrosion-resistant layer 6 and the main body unit 5 due to a pulling force applied thereto for removal from a mold after such an operation of injecting, molding, and covering. Thus, airtightness between the corrosion-resistant layer 6 and the main body unit 5 can be maintained, and also, the mold also helps form a stepped configuration on an outer surface of the corrosion-resistant layer 3 that is molded on and covers the supporting surface 541 to ease fitting of a pipe PI thereto.

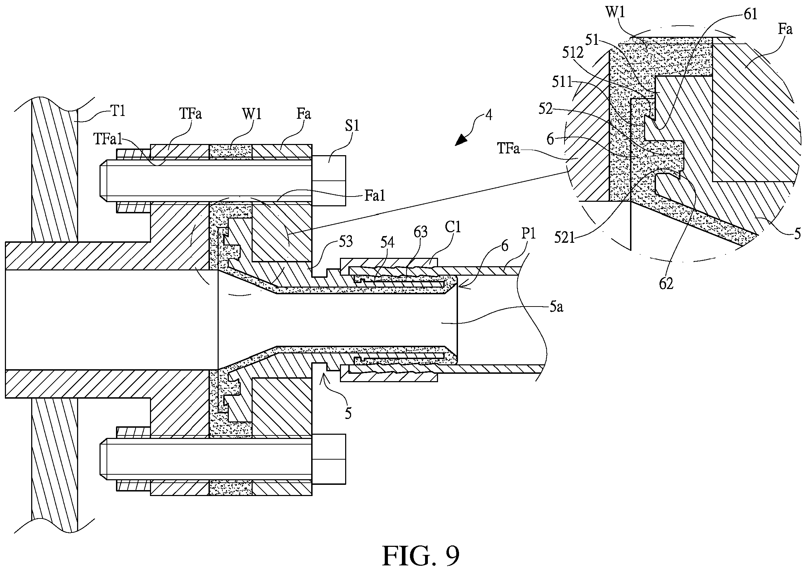

As shown in FIGS. 6, 7, and 9, to use the pipe fitting 4 of the present invention, a flange Fa is fit over an outer circumference of the neck section 53 of the main body unit 5 and fastening elements S1 are set through fastening holes Fa1 of the flange Fa to screw into and thus fix to fixing holes TFa1 of an egress flange TFa of a storage tank T1 of liquid or gas. Further, a gasket W1 for preventing leaking is interposed between the flange Fa and the egress flange TFa, such that the gasket W1 covers the end surface of the rim 51 of the main body unit 5. The connecting section 54 of the main body unit 5 receives a pipe PI to fit thereon and then, a pipe clamp C1 is set around the outside of the pipe PI to clamp and secure tightness between the pipe PI and the connecting section 54 for preventing the pipe PI from detaching from the connecting section 54. As such, corrosive liquid or gas stored in the storage tank T1 is allowed to flow through the egress flange TFa into the flow channel 5a inside the main body unit 5 of the pipe fitting 4 for subsequent entry into the pipe PI, so as to convey the corrosive liquid or gas from the storage tank T1 to other location.

The effectiveness of the present invention is that the corrosion-resistant layer 6 is allowed to penetrate into the annular retaining notch 512 of the main body unit 5 to form the first retaining section 61; the corrosion-resistant layer 6 is also allowed penetrate into the retaining trough 521 of the main body unit 5 to form the second retaining section 62; and, in addition, the supporting surface 541 of the main body unit 5the connecting section 54 is made as a roughened surface through embossing or knurling, so that upon being injected onto and molded on, and thus covering, the supporting surface 541, the corrosion-resistant layer 3, with a part thereof, forms the third retaining section 63, whereby a retaining effect can be achieved with the first retaining section 61, the second retaining section 62, and the third retaining section 63 to prevent a gap from forming between the corrosion-resistant layer 6 and the main body unit 5 due to a pulling force applied thereto for removal from a mold after such an operation of injecting, molding, and covering and thus ensuring airtightness between the corrosion-resistant layer 6 and the main body unit 5. Further, since the supporting surface 541 of the connecting section 54 of the main body unit 5 is formed as a roughened surface through for example embossing or knurling, in addition to ensuring airtightness between the corrosion-resistant layer 6 and the main body unit 5, it is also to ensure the smoothness of flowing through the flow channel 5a of the main body unit 5 to thus enhance the utilization of the pipe fitting 4.

## Claims

1. A flange liner pipe fitting structure, a pipe fitting (4) comprising a main body unit (5) and a corrosion-resistant layer (6) formed on and covering the main body unit (5), the main body unit (5) comprising a flow channel (5a) extending therethrough and having a front end formed with a rim (51), the rim (51) being formed, through recessing, with a fitting groove (52), the rim (51) being formed, as being extended in a rearward direction, with a neck section (53) that defines a step with respect to the rim (51) by means of a dimension difference therebetween, the neck section (53) being formed with a connecting section (54) that faces rearward and has a diameter smaller than the neck section (53), the corrosion-resistant layer (6) being formed to cover a surface of the flow channel (5a) of the main body unit (5), an end surface of the rim (51), and an outside surface of the connecting section (54), **characterized in that** the corrosion-resistant layer (6) forms three retaining sections (61, 62, 63) on the rim (51) of the main body unit (5) and the outside surface of the connecting section (54), wherein the end surface of the rim (51) is formed, as being extended frontward, with a raised ring (511) in the form of an annular projection and facing frontward, an outer side of the raised ring (511) and the end face of the rim (51) forming an annular retaining notch (512) in the form of a chamfering angle; and the corrosion-resistant layer (6) forms the first retaining section (61) in the annular retaining notch; the fitting groove (52) is formed with a retaining trough (521) in the form of a chamfer extending toward the flow channel (5a); and the corrosion-resistant layer (6) forms the second retaining section (62) in the retaining trough (521); and the connecting section (54) has an outer circumferential surface that is formed with a roughened supporting surface (541); and the corrosion-resistant layer (6) forms the third retaining section (63) on the supporting surface (541).

2. The flange liner pipe fitting structure according to claim 1, wherein the chamfer of the retaining trough (521) is of a stepped configuration.

3. The flange liner pipe fitting structure according to claim 1, wherein the supporting surface (541) is formed as a roughened surface by embossing or knurling.

## Patentansprüche

1. Flanschauskleidungsrohr-Montagestruktur, wobei ein Rohrfitting (4) eine Hauptkörpereinheit (5) und eine korrosionsbeständige Schicht (6) umfasst, die auf der Hauptkörpereinheit (5) gebildet ist und diese bedeckt, wobei die Hauptkörpereinheit (5) einen Strömungskanal (5a) umfasst, der sich durch diese hindurch erstreckt und ein vorderes Ende hat, das mit einem Rand (51) gebildet ist, wobei der Rand (51) durch Aussparen mit einer Paßnut (52) gebildet ist, wobei der Rand (51), wenn er sich in einer rückwärtigen Richtung erstreckt, mit einem Halsabschnitt (53) gebildet ist, der eine Stufe in Bezug auf den Rand (51) mittels einer Abmessungsdifferenz dazwischen definiert, wobei der Halsabschnitt (53) mit einem Verbindungsabschnitt (54) gebildet ist, der nach hinten zeigt und einen Durchmesser hat, der kleiner als der Halsabschnitt (53) ist, wobei die korrosionsbeständige Schicht (6) gebildet ist, um eine Oberfläche des Strömungskanals (5a) der Hauptkörpereinheit (5), eine Endfläche des Randes (51) und eine Außenfläche des Verbindungsabschnitts (54) zu bedecken, **gekennzeichnet dadurch, dass** die korrosionsbeständige Schicht (6) drei Halteabschnitte (61, 62, 63) auf dem Rand (51) der Hauptkörpereinheit (5) und der Außenfläche des Verbindungsabschnitts (54) bildet, wobei die Endfläche des Randes (51), wenn sie nach vorne verlängert ist, mit einem erhabenen Ring (511) in Form eines ringförmigen Vorsprungs und nach vorne gerichtet gebildet ist, wobei eine Außenseite des erhabenen Rings (511) und die Endfläche des Randes (51) eine ringförmige Haltekerbe (512) in Form eines Anfasungswinkels bilden; und die korrosionsbeständige Schicht (6) den ersten Halteabschnitt (61) in der ringförmigen Haltekerbe bildet; die Paßnut (52) mit einer Haltemulde (521) in Form einer sich zu dem Strömungskanal (5a) hin erstreckenden Abschrägung gebildet ist; und die korrosionsbeständige Schicht (6) den zweiten Halteabschnitt (62) in der Haltemulde (521) bildet; und der Verbindungsabschnitt (54) eine äußere Umfangsoberfläche hat, die mit einer aufgerauten Stützfläche (541) gebildet ist; und die korrosionsbeständige Schicht (6) den dritten Halteabschnitt (63) auf der Stützfläche (541) bildet.

2. Flanschauskleidungsrohr-Montagestruktur nach Anspruch 1, wobei die Abschrägung der Haltemulde (521) eine abgestufte Konfiguration hat.

3. Flanschauskleidungsrohr-Montagestruktur nach Anspruch 1, wobei die Stützfläche (541) als aufgeraute Oberfläche durch Prägen oder Rändeln gebildet ist.

## Revendications

1. Structure de fixation de tuyau de revêtement de bride, une fixation de tuyau (4) comprenant une unité de corps principal (5) et une couche résistante à la corrosion (6) formée dessus et recouvrant l'unité de corps principal (5), l'unité de corps principal (5) comprenant un canal d'écoulement (5a) s'étendant à travers celle-ci et ayant une extrémité avant formée avec un rebord (51), le rebord (51) étant formé, par évidement, avec une rainure d'ajustement (52), le rebord (51) étant formé, comme étant étendu dans une direction vers l'arrière, avec une section de col (53) qui définit un étage par rapport au rebord (51) au moyen d'une différence de dimension entre eux, la section de col (53) étant formée avec une section de connexion (54) qui fait face à l'arrière et a un diamètre inférieur à la section de col (53), la couche résistante à la corrosion (6) étant formée pour recouvrir une surface du canal d'écoulement (5a) de l'unité de corps principal (5), une surface d'extrémité du rebord (51), et une surface extérieure de la section de connexion (54), **caractérisée en ce que** la couche résistante à la corrosion (6) forme trois sections de retenue (61, 62, 63) sur le rebord (51) de l'unité de corps principal (5) et la surface extérieure de la section de connexion (54), où la surface d'extrémité du rebord (51) est formée, comme étant étendue vers l'avant, avec une bague surélevée (511) en forme de saillie annulaire et faisant face vers l'avant, un côté extérieur de la bague surélevée (511) et la face d'extrémité du rebord (51) formant une encoche de retenue annulaire (512) sous la forme d'un angle de chanfrein ; et la couche résistante à la corrosion (6) forme la première section de retenue (61) dans l'encoche de retenue annulaire ; la rainure d'ajustement (52) est formée avec un creux de retenue (521) sous la forme d'un chanfrein s'étendant vers le canal d'écoulement (5a) ; et la couche résistante à la corrosion (6) forme la deuxième section de retenue (62) dans le creux de retenue (521) ; et la section de connexion (54) a une surface circonférentielle extérieure qui est formée avec une surface de support (541) rugueuse ; et la couche résistante à la corrosion (6) forme la troisième section de retenue (63) sur la surface de support (541).

2. Structure de fixation de tuyau de revêtement de bride selon la revendication 1, où le chanfrein du creux de retenue (521) est d'une configuration étagée.

3. Structure de fixation de tuyau de revêtement de bride selon la revendication 1, où la surface de support (541) est formée en forme de surface rugueuse par gaufrage ou moletage.
